# EUROPÄISCHE PATENTSCHRIFT

(11) **EP 2 393 708 B1**
(45) Veröffentlichungstag und Bekanntmachung des Hinweises auf die Patenterteilung: **26.12.2012**
(21) Anmeldenummer: 09795365.7
(22) Anmeldetag: 30.11.2009
(51) Int. Cl.: B63H 21/14

(54) **VERBRENNUNGSKRAFTMASCHINENANLAGE MIT ABGASENERGIERÜCKGEWINNUNG FÜR SCHWIMMENDE EINRICHTUNGEN**
INTERNAL COMBUSTION ENGINE SYSTEM HAVING EXHAUST GAS ENERGY RECAPTURE FOR FLOATING DEVICES
SYSTÈME DE MOTEUR À COMBUSTION INTERNE AVEC RÉCUPÉRATION D'ÉNERGIE DE GAZ D'ÉCHAPPEMENT POUR DES DISPOSITIFS FLOTTANTS

(30) Priorität: 09.02.2009 DE 102009008061
(43) Veröffentlichungstag der Anmeldung: 14.12.2011
(73) Patentinhaber: Siemens Aktiengesellschaft, 80333 München (DE)
(72) Erfinder: SCHRÖDER, Dierk, 24238 Selent (DE)
(74) Vertreter: Wolff, Harry
(86) Internationale Anmeldenummer: PCT/EP2009/066055
(87) Internationale Veröffentlichungsnummer: WO 2010/088980

(56) Entgegenhaltungen:
- WO-A1-2008/145651
- DE-A1-102006 061 374
- GB-A- 575 018
- US-A- 4 369 630
- US-A- 6 161 374
- US-A1- 2008 141 921

## Beschreibung

Die Erfindung betrifft eine Verbrennungskraftmaschinenanlage gemäß Oberbegriff des Patentanspruchs 1; eine derartige Anlage ist z.B. aus der Veröffentlichung "Less emissions through waste heat recovery", Wärtsilä Corporation, April 2004, präsentiert auf der Green Ship Conference, London, 28/29 April 2004, bekannt.

Aus der vorgenannten Veröffentlichung ist eine Verbrennungskraftmaschinenanlage für ein Schiff bekannt, bei der eine Verbrennungskraftmaschine in Form eines Schiffsgroßdieselmotors einen Schiffspropeller antreibt. In einem Abgasstrom des Dieselmotors ist ein Abgasturbolader angeordnet, der die dem Dieselmotor zugeführte Luft verdichtet und somit für eine bedarfsgerechte Luftzufuhr und Ladung des Dieselmotors sorgt.

Im Detail besteht der Abgasturbolader aus einer in dem Abgasstrom angeordneten Abgasturbine und einem in der Luftzufuhr zu dem Dieselmotor angeordneten Verdichter, der mechanisch von der Abgasturbine angetriebenen wird. In einem anderen Abgasstrom des Dieselmotors ist eine Abgasturbine angeordnet, die einen Generator antreibt, der elektrische Energie für ein Bordnetz des Schiffes erzeugt. Anschließend werden beide Abgasströme zusammengeführt und darin verbleibende Restwärme an einen Wasser-Dampfkreislauf übertragen, der eine Dampfturbine umfasst, die ebenfalls den bereits erwähnten Generator antreibt. Zusätzlich erzeugen mehrere von jeweils einem Dieselmotor angetriebene Bordnetzgeneratoren elektrische Energie für das Bordnetz. Ein mit der Propellerwelle gekoppelte Wellengenerator/-motor erzeugt im Generatorbetrieb ebenfalls elektrische Energie für das Bordnetz oder wird im Motorbetrieb mit elektrischer Energie aus dem Bordnetz betrieben und erzeugt dabei zusätzliches Drehmoment für die Propellerwelle.

Die WO 2008/077862 A2 offenbart eine Schiffsmaschinenanlage, bei der zur Ausnutzung der Überschussenergie in den Abgasen eines Schiffsgroßdieselmotors ein Abgasturbolader und ein Abgasturbogenerator in Abgasströmen des Schiffsgroßdieselmotors angeordnet sind.

Mit derartigen Anlagen ist es bereits möglich, die Abgasenergie einer Verbrennungskraftmaschine in hohem Maße zu nutzen und dabei ein gutes Betriebsverhalten der Verbrennungskraftmaschine zu erzielen.

Es ist Aufgabe vorliegender Erfindung, im Vergleich hierzu die Abgasenergie noch besser zu nutzen und dabei den Betrieb der Verbrennungskraftmaschine noch weiter zu verbessern.

Die Lösung dieser Aufgabe gelingt durch eine Verbrennungskraftmaschinenanlage gemäß Patentanspruch 1. Vorteilhafte Ausgestaltungen sind jeweils Gegenstand der Unteransprüche.

Erfindungsgemäß dient ein elektrischer Motor zum Antrieb des Verdichters, wobei der elektrische Motor mit elektrischer Energie aus dem elektrischen Netz betrieben wird und wobei der Verdichter mechanisch von der Abgasturbine entkoppelt ist. Der Verdichter wird somit nicht mechanisch von der Abgasturbine angetrieben, sondern durch einen elektrischen Motor angetrieben.

Die Erfindung geht hierbei von der Erkenntnis aus, dass im Teillastbereich die Abgasenergie manchmal weder ausreicht, um die Verbrennungskraftmaschine bedarfsgerecht mit verdichteter Luft zu versorgen (d.h. die Verbrennungskraftmaschine ist nicht optimal aufgeladen), noch um mit dem Abgasturbogenerator mit gutem Wirkungsgrad elektrische Energie für das Bordnetz zu erzeugen. Durch die mechanische Entkopplung des Verdichters von der ihm zugeordneten Abgasturbine und dessen Antrieb durch einen elektrischen Motor, der aus dem Netz versorgt wird, kann die Luftverdichtung unabhängig von der Leistung der Abgasturbine erfolgen. Die Verbrennungskraftmaschine kann somit auch im Teillastbereich optimal aufgeladen werden. Dies ist auch vorteilhaft bei einer schnellen Erhöhung der Leistungsanforderung an die Verbrennungskraftmaschine, wenn der Leistungsbedarf für den Antrieb des Verdichters kurzfristig größer wird als die von der Abgasturbine abgebbare mechanische Leistung.

Da mit der Erfindung die gesamte Abgasenergie für die Abgasturbine zur Verfügung steht, kann diese mit gutem Wirkungsgrad arbeiten und somit eine optimale Abgasenergienutzung gewährleisten.

Durch die mechanische Entkopplung der Abgasturbine vom Verdichter werden diese beiden Wärmeerzeuger auch thermisch voneinander getrennt, wodurch eine effizientere Verdichtung möglich ist.

Weitere Wirkungsgradvorteile für die Abgasturbine ergeben sich dadurch, dass mit der Erfindung der Abgasgegendruck geringer ist, da statt einer Abgasturbine für die Stromerzeugung und einer Abgasturbine für den Turbolader nur eine einzige Abgasturbine vorhanden ist.

Dabei umfasst die Maschinenanlage ein Steuer- oder Regelsystem, das einen für eine bedarfsgerechte Verdichtung der Luft notwendigen elektrischen Energiebedarf des elektrischen Motors für den Antrieb des Verdichters und die durch die Abgasturbine erzeugte elektrische Energie ermittelt und in Abhängigkeit davon die elektrische Energieerzeugung durch den zumindest einen weiteren Generator steuert oder regelt.

Die zumindest eine Verbrennungskraftmaschine kann ein Bestandteil eines dieselmechanischen Systems sein, d.h. die zumindest eine Verbrennungskraftmaschine kann mechanisch eine Antrieb- oder Vortriebseinheit, wie z.B. einen Schiffspropeller, antreiben.

Die zumindest eine Verbrennungskraftmaschine kann aber auch ein Bestandteil eines dieselelektrischen Systems sein, d.h. sie kann auch einen Generator antreiben, der elektrische Energie erzeugt, z.B. für ein elektrisches Netz oder für den elektrischen Antrieb einer Antriebs- oder Vortriebseinheit.

Bei der Verbrennungskraftmaschine kann es sich beispielsweise um einen Dieselmotor oder um eine Gasturbine handeln.

Die Anwendung der Erfindung ist jedoch nicht allein auf schwimmende Einrichtungen beschränkt, sondern kann auch in stationären Anlagen, wie z.B. Dieselkraftwerken, von Vorteil sein.

Die Erfindung sowie weitere vorteilhaftes Ausgestaltungen der Erfindung gemäß Merkmalen der Unteransprüche werden im Folgenden anhand von Ausführungsbeispielen in den Figuren näher erläutert. Es zeigt:
- FIG 1: ein Prinzipschaltbild einer Maschinenanlage eines dieselmechanischen Antriebssystems,
- FIG 2: ein Prinzipschaltbild einer ersten Ausführungsform einer Maschinenanlage eines dieselelektrischen Antriebssystems,
- FIG 3: ein Prinzipschaltbild einer zweiten Ausführungsform einer Maschinenanlage eines dieselelektrischen Antriebssystems.

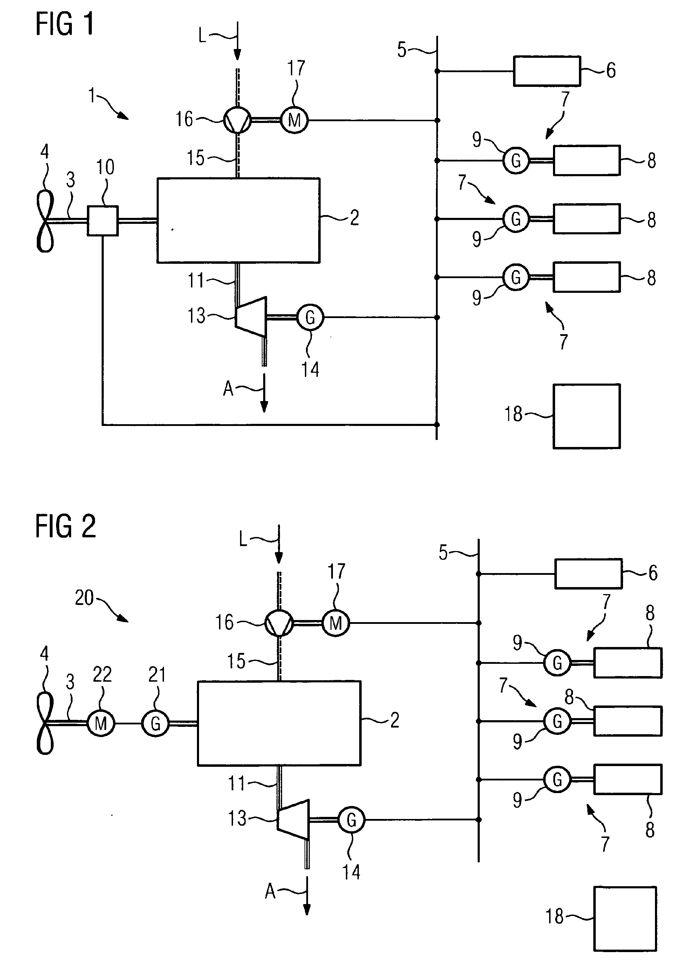

Eine in FIG 1 gezeigte Verbrennungskraftmaschinenanlage 1 eines dieselmechanischen Antriebssystems umfasst als Hauptmaschine einen Schiffsgroßdieselmotor 2, der über eine Propellerwelle 3 eine Vortriebseinheit des Schiffes, hier einen Schiffspropeller 4, antreibt. Der Schiffsgroßdieselmotor 2 weist in der Regel acht bis vierzehn Zylinder und eine Leistung von bis zu 90 MW auf.

Ein elektrisches Bordnetz 5 dient zur Energieversorgung von Schiffsverbrauchern 6 wie z.B. der Beleuchtung und Klimatisierung an Bord des Schiffes. Die elektrische Energie für das Bordnetz 5 wird durch drei Dieselgeneratoren 7 erzeugt, die aus jeweils einem Dieselmotor 8 und einem von diesem angetrieben Generator 9 bestehen.

Auf der Propellerwelle 3 ist bei modernen Schiffen, insbesondere bei Containerschiffen, ein Wellengenerator/-motor 10 angeordnet, der im Motorbetrieb aus dem Bordnetz 5 gespeist wird und zusätzliches Drehmoment für den Antrieb des Propellers 4 zur Verfügung stellt sowie im Generatorbetrieb von der Propellerwelle 3 angetrieben wird und zusätzliche elektrische Energie in das Bordnetz 5 einspeist.

In einer Abgasleitung 11 strömt ein Abgas A des Dieselmotors 2. In der Abgasleitung 11 ist eine Abgasturbine 13 angeordnet, die von dem in der Abgasleitung strömenden heißen Abgas A angetrieben wird und einen Generator 14 antreibt, der ebenfalls elektrische Energie in das Bordnetz 5 einspeist.

Über eine Luftleitung 15 wird dem Dieselmotor 2 Luft L zugeführt, die mittels eines Verdichters 16 verdichtet wird, um eine optimale Luftzufuhr und Ladung des Dieselmotors 2 zu gewährleisten. Der Verdichter 16 wird von einem elektrischen Motor 17 angetrieben, der aus dem Bordnetz 5 mit elektrischer Energie versorgt wird.

Durch die mechanische Entkopplung des Antriebs des Verdichters 17 von der Abgasturbine 13 und dessen Antrieb durch einen aus dem Netz 5 gespeisten elektrischen Motor 17 kann die Luftverdichtung unabhängig von der Leistung der Abgasturbine 13 erfolgen. Der über die von der Abgasturbine 13 bzw. dem Generator 14 bereitgestellte Leistung hinausgehende Leistungsbedarf des Verdichters 16 kann dabei von den Dieselgeneratoren 7 oder dem Wellengenerator/-motor 10 gedeckt werden. Der Dieselmotor 2 kann somit auch im Teillastbereich optimal aufgeladen werden. Auch bei einer schnellen Erhöhung der Leistungsanforderung an den Dieselmotor 2, wenn der Leistungsbedarf für den Antrieb des Verdichters 16 kurzfristig größer wird als die von der Abgasturbine 13 abgebbare Leistung, kann die benötigte Überschussleistung von den Dieselgeneratoren 7 oder dem Wellengenerator/-motor 10 gedeckt werden. Auf der anderen Seite steht die gesamte Abgasenergie des Dieselmotors 2 für die Abgasturbine 13 zur Verfügung, so dass diese mit einem guten Wirkungsgrad die Abgasenergie ausnutzen kann.

Durch die mechanische Entkopplung der Abgasturbine 13 vom Verdichter 16 erfolgt auch eine thermische Trennung dieser beiden Wärmerzeuger, wodurch eine effizientere Verdichtung möglich ist.

Ein Steuer- oder Regelsystem 18 ermittelt einen für eine bedarfsgerechte Verdichtung der Luft L notwendigen elektrischen Energiebedarf des elektrischen Motors 17 und die durch die Abgasturbine 13 bzw. dem Generator 14 erzeugte elektrische Energie und steuert oder regelt in Abhängigkeit davon die elektrische Energieerzeugung durch die Dieselgeneratoren 7 und den Wellengenerator/-motor 10.

Eine in FIG 2 gezeigten Maschinenanlage 20 eines dieselelektrischen Antriebssystems unterscheidet sich im wesentlichen von der in FIG 1 gezeigten Maschinenanlage 1 dadurch, dass der Großdieselmotor 2 nicht direkt eine Propellerwelle 3, sondern einen Generator 21 antreibt, der wiederum einen elektrischen Motor 22 mit elektrischer Energie versorgt. Der elektrische Motor 22 treibt dann über eine Propellerwelle 3 einen Schiffspropeller 4 an.

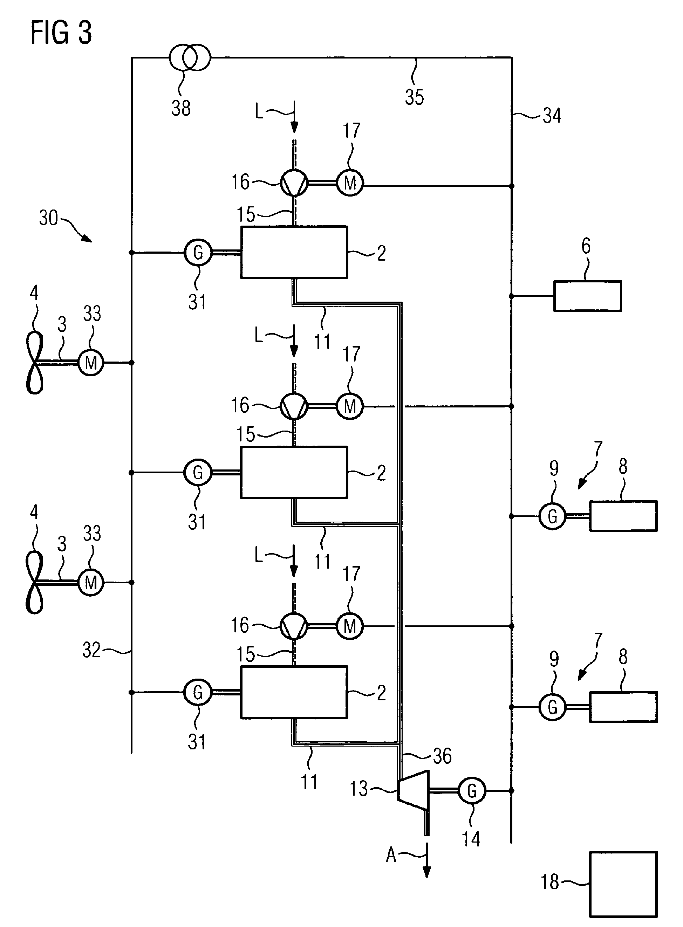

Eine in FIG 3 gezeigte Maschinenanlage 30 eines dieselelektrischen Antriebssystems umfasst mehrere Großdieselmotoren 2, die jeweils einen Generator 31 antreiben. Die Generatoren 31 speisen elektrische Energie in ein erstes elektrisches Netz 32, z.B. ein Mittelspannungsnetz, aus dem wiederum elektrische Motoren 33 gespeist werden, die jeweils einen Schiffspropeller 4 antreiben.

Ein zweites elektrisches Netz 34 mit einer niedrigeren Nennspannung als das erste elektrische Netz 32 dient zur Versorgung weiterer elektrischer Verbraucher 6 wie z.B. der Beleuchtung und Klimatisierung des Schiffes. Die elektrische Energie für das zweite elektrische Netz 32 wird durch Dieselgeneratoren 7 erzeugt. Über eine elektrische Verbindung 35 mit einem darin angeordneten Transformator 38 ist zudem ein Energiefluss von dem ersten Netz 32 zu dem zweiten Netz 34 möglich.

Die Abgasleitungen 11 der Großdieselmotoren 2 sind zu einer einzigen Abgasleitung 36 zusammengeführt, in der eine Abgasturbine 13 angeordnet ist, die einen Generator 14 antreibt. Die Abgasturbine 13 ist somit in dem Gesamtabgasstrom 37 der Großdieselmotoren 2 angeordnet. Die Abgasturbine 13 erzeugt mit hohem Wirkungsgrad elektrische Energie für das zweite Netz 34.

Jeder der Dieselmotoren 2 weist eine Luftzufuhrleitung 15 mit jeweils einem darin angeordneten Verdichter 16 zur Verdichtung der Luft L auf, die dem Dieselmotor 2 zugeführt wird. Der Antrieb des Verdichters 16 erfolgt durch einen elektrischen Motor 17, der aus dem zweiten Netz 34 mit elektrischer Energie versorgt wird.

In ähnlicher Weise wie bei den in FIG 1 - 3 dargestellten Großdieselmotoren 2, d.h. den Hauptmaschinen, kann mit Hilfe von Abgasturbinen auch Abgasenergie aus den Dieselmotoren 8 der Dieselgeneratoren 7, d.h. den Hilfsmaschinen, gewonnen und als elektrische Energie in ein elektrisches Netz eingespeist werden. Entsprechend kann auch die Luftzufuhr zu den Dieselmotoren 8 und deren Aufladung über Verdichter erfolgen, die von elektrischen Motoren angetrieben werden, die aus dem elektrischen Netz gespeist werden.

## Patentansprüche

1. Verbrennungskraftmaschinenanlage (1, 20, 30) mit Abgasenergierückgewinnung für schwimmende Einrichtungen, wie z.B. Schiffe und Offshore-Plattformen, umfassend
- zumindest eine Verbrennungskraftmaschine (2),
- eine durch ein Abgas (A) der Verbrennungskraftmaschine (2) angetriebene Abgasturbine (13),
- einen Verdichter (16) zur Verdichtung von Luft (L), die der Verbrennungskraftmaschine (2) zugeführt wird,
- ein elektrisches Netz (5),
- einen von der Abgasturbine (13) angetriebenen Generator (14) zur Erzeugung von elektrischer Energie für das elektrisches Netz (5),
- zumindest einen weiteren Generator (9) zur Erzeugung elektrischer Energie für das elektrische Netz (5),
**gekennzeichnet durch**
- einen elektrischen Motor (17) zum Antrieb des Verdichters (16),
- wobei der elektrische Motor (17) mit elektrischer Energie aus dem elektrischen Netz (5, 34) betrieben wird und
- wobei der Verdichter (16) mechanisch von der Abgasturbine (13) entkoppelt ist,
- und weiter **gekennzeichnet durch** ein Steuer- oder Regelsystem (18), das einen für eine bedarfsgerechte Verdichtung der Luft notwendigen elektrischen Energiebedarf des elektrischen Motors (17) und die **durch** die Abgasturbine (13) erzeugte elektrische Energie ermittelt und in Abhängigkeit davon die elektrische Energieerzeugung **durch** den zumindest einen weiteren Generator (9) steuert oder regelt.

2. Maschinenanlage (1, 20, 30) nach Anspruch 1,
**dadurch gekennzeichnet, dass** die zumindest eine Verbrennungskraftmaschine (2) eine Antriebseinheit oder eine Vortriebseinheit (4) antreibt.

3. Maschinenanlage (1, 20, 30) nach Anspruch 1,
**dadurch gekennzeichnet, dass** die zumindest eine Verbrennungskraftmaschine (2) einen Generator (21, 33) zur Erzeugung elektrischer Energie, insbesondere für das elektrische Netz (5), antreibt.

## Claims

1. Internal combustion engine system (1, 20, 30) having exhaust gas energy recapture for floating devices, such as ships and offshore platforms for example, comprising
- at least one internal combustion engine (2),
- an exhaust gas turbine (13) driven by exhaust gas (A) of the internal combustion engine (2),
- a compressor (16) for compressing air (L) which is fed to the internal combustion engine (2),
- an electrical network (5),
- a generator (14) driven by the exhaust gas turbine (13) for generating electrical energy for the electrical network (5),
- at least one further generator (9) for generating electrical energy for the electrical network (5)
**characterised by**
- an electric motor (17) for driving the compressor (16),
- wherein the electric motor (17) is operated with electrical energy from the electrical network (5, 34) and
- wherein the compressor (16) is mechanically decoupled from the exhaust gas turbine (13),
- and further **characterised by** an open-loop or closed-loop control system (18), which determines an electrical energy requirement of the electric motor (17) necessary for compressing the air as required and the electrical energy generated by the exhaust gas turbine (13) and, as a function thereof, controls or regulates the electrical energy generation by the at least one further generator (9).

2. Engine system (1, 20, 30) according to claim 1,
**characterised in that** the at least one internal combustion engine (2) drives a drive unit or a propulsion unit (4).

3. Engine system (1, 20, 30) according to claim 1,
**characterised in that** the at least one internal combustion engine (2) drives a generator (21, 33) for generating electrical energy, especially for the electrical network (5).

## Revendications

1. Système ( 1, 20, 30 ) de moteur à combustion interne et à récupération de l'énergie de gaz d'échappement pour des bâtiments flottants, comme par exemple des bateaux et des plateformes en mer, comprenant
- au moins un moteur ( 2 ) à combustion interne,
- une turbine ( 13 ) à gaz d'échappement entraînée par un gaz ( A ) d'échappement du moteur ( 2 ) à combustion interne,
- un compresseur ( 16 ) pour la compression d'air ( L ), qui est envoyé au moteur ( 2 ) à combustion interne,
- un réseau ( 5 ) électrique,
- une génératrice ( 14 ), qui est entraînée par la turbine ( 13 ) à gaz d'échappement et qui est destinée à produire de l'énergie électrique pour le réseau ( 5 ) électrique,
- au moins une autre génératrice ( 9 ) de production d'énergie électrique pour le réseau ( 5 ) électrique,
**caractérisé par**
- un moteur ( 17 ) électrique pour l'entraînement du compresseur ( 16 ),
- dans lequel le moteur ( 17 ) électrique fonctionne avec de l'énergie électrique du réseau ( 5, 34 ) électrique et
- dans lequel le compresseur ( 16 ) est découplé mécanique de la turbine ( 13 ) à gaz d'échappement,
- et **caractérisé, en outre, par** un système ( 18 ) de commande ou de régulation, qui détermine un besoin d'énergie électrique du moteur ( 17 ) électrique, nécessaire à une compression de l'air conforme au besoin, et l'énergie électrique produite par la turbine ( 13 ) à gaz d'échappement et commande en fonction de cela la production d'énergie électrique par la au moins une autre génératrice ( 9 ) .

2. Système ( 1, 20, 30 ) de moteur suivant la revendication 1, **caractérisé en ce que** le au moins un moteur ( 2 ) à combustion interne entraîne un groupe d'entraînement ou un groupe ( 4 ) de propulsion.

3. Système ( 1, 20, 30 ) de moteur suivant la revendication 1, **caractérisé en ce que** le au moins un moteur ( 2 ) à combustion interne entraîne une génératrice ( 21, 33 ) de production d'énergie électrique, notamment pour le réseau ( 5 ) électrique.
